**Europäisches Patentamt**

**European Patent Office**

**Office européen des brevets**

(19)

(11) Veröffentlichungsnummer : **0 026 905**
**B1**

(12) # EUROPÄISCHE PATENTSCHRIFT

(45) Veröffentlichungstag der Patentschrift :
11.05.83

(21) Anmeldenummer : 80105905.6

(22) Anmeldetag : 30.09.80

(51) Int. Cl.³ : **C 04 B 21/02, C 04 B 15/02,**
**C 04 B 13/24**

(54) Schaumgips, Verfahren zu seiner Herstellung und seine Verwendung zur Herstellung von Bauelementen.

(30) Priorität : 08.10.79 DE 2940785

(43) Veröffentlichungstag der Anmeldung :
15.04.81 Patentblatt 81/15

(45) Bekanntmachung des Hinweises auf die Patenterteilung : 11.05.83 Patentblatt 83/19

(84) Benannte Vertragsstaaten :
DE FR GB NL

(56) Entgegenhaltungen :
DE A 2 250 611
DE B 2 546 181
FR A 1 461 892
FR A 2 345 407

(73) Patentinhaber : HOECHST AKTIENGESELLSCHAFT
Postfach 80 03 20
D-6230 Frankfurt/Main 80 (DE)

(72) Erfinder : Eckardt, Peter, Dr.
Brandenburger Weg 14
D-6238 Hofheim am Taunus (DE)

EP 0 026 905 B1

Jouve, 18, rue St-Denis, 75001 Paris, France

Schaumgips, Verfahren zu seiner Herstellung und seine Verwendung zur Herstellung von Bauelementen

Die Erfindung bezieht sich auf einen Schaumgips, der ein Polyurethan enthält, Verfahren zu seiner Herstellung und seine Verwendung, zur Herstellung von Bauelementen.

Es ist bekannt, daß Gipsschaum durch Verschäumen eines Gips/Wasser-Gemisches hergestellt wird, das schaumstabilisierende Zusätze sowie Isocyanat-Verbindungen und/oder Polyurethan Voraddukte enthält (vgl. DE-B-25 46 181 = US-Patentschrift 4 153 470). Bei der Herstellung kann Polyvinylalkohol in einer Menge von 0,1 bis 0,5 Prozent als Haftvermittler eingesetzt werden. Der erhaltene Schaum zeigt eine Dichte von 0,45 bis 0,8 g/ml und wird insbesondere zur Herstellung speziell geformter Bauelemente verwendet.

Ferner ist bekannt, daß ein verstärktes Strukturmaterial mit geringem Gewicht, hoher Biegefestigkeit und Druckfestigkeit auf einer Kombination eines anorganischen, zementartigen Materials, z. B. Gips, mit einem organischen Polymer, das schäumbar ist, z. B. Polyurethan, beruht (vgl. DE-A-22 50 611 = US-Patentschrift 38 78 278). An Stelle von Polyurethan sollen auch schäumbare Thermoplaste, z. B. Polyvinylalkohol, verwendbar sein. Das Ausgangsgemisch besteht aus 50 bis 80 Prozent anorganischem Material, 1 bis 10 Prozent Polymermaterial sowie Wasser, Katalysator und Füllstoffen.

Daß man durch Zusatz von geringen Mengen von Borsäure zu Gips dessen Härte erhöhen kann, ist ebenfalls eine bekannte Tatsache (vgl. japanische Offenlegungsschrift 77/087 405, referiert in Chemical Abstracts Vol. 88 (1978), 40 888 u).

Weiterhin ist eine zementartige Masse bekannt, die sich zusammensetzt aus kalziniertem Gips, Asphalt, Wachs sowie geringen Mengen von Polyvinylalkohol und einer Borat-Verbindung, z. B. Borsäure (vgl. FR-A-2 345 407 = US-Patentschrift 4 094 694). Diese Masse zeichnet sich durch eine verbesserte Wasserfestigkeit aus.

Schließlich ist auch bekannt, daß die Viskosität wäßriger Lösungen von Polyvinylalkohol durch Zusatz von Borverbindungen, z. B. Borsäure, erheblich erhöht werden kann (vgl. deutsche Patentschrift 606 440 = Britische Patentschrift 413 624). Die Viskositätssteigerung tritt dabei in besonderem Maße in Erscheinung, wenn der pH-Wert der Lösung zur alkalischen Seite verändert wird.

Aufgabe der Erfindung ist nun die Schaffung eines Schaumgipses, der durch eine feine und gleichmäßige Porenstruktur charakterisiert ist, verbesserte mechanische Eigenschaften aufweist und in einfacher und wirtschaftlicher Weise herstellbar ist.

Die Erfindung betrifft einen Schaumgips, enthaltend Polyvinylalkohol, ein Polyurethan in einer Menge von 1 bis 15 Gewichtsprozent (bezogen auf Gips) und gegebenenfalls weitere übliche Zusatzstoffe, dadurch gekennzeichnet, daß er den Polyvinylalkohol, der eine Esterzahl von mindestens 50 mg KOH/g und dessen 4 gewichtsprozentige wäßrige Lösung eine Viskosität von 3 bis 40 mPa · s aufweist (gemessen nach DIN 53 015 bei einer Temperatur von 20 °C nach Höppler), in einer Menge von 0,05 bis 5 Gewichtsprozent (bezogen auf Gips) und 0,05 bis 2 Gewichtsprozent (bezogen auf Gips) Borsäure enthält und das Litergewicht des Schaumgipses 200 bis 1 000 g beträgt.

Der erfindungsgemäße Schaumgips hat ein Litergewicht von 200 bis 1 000 g, vorzugsweise 300 bis 600 g.

Die Erfindung betrifft ferner ein Verfahren zur Herstellung von Schaumgips durch Verschäumen eines Gemisches aus Gips, Polyvinylalkohol, Borsäure, Wasser, einem Polyurethan-Voraddukt, einem Katalysator und gegebenenfalls weiteren üblichen Zusatztoffen, dadurch gekennzeichnet, daß das Verschäumen bei einer Temperatur von 20 bis 60 °C in Gegenwart von 0,05 bis 5 Gewichtsprozent (bezogen auf die Gipsmenge) eines Polyvinylalkohols, der eine Esterzahl von mindestens 50 mg KOH/g und dessen 4 gewichtsprozentige wäßrige Lösung eine Viskosität von 3 bis 40 mPa · s aufweist (gemessen nach DIN 53 015 bei einer Temperatur von 20 °C nach Höppler), und 0,05 bis 2 Gewichtsprozent (bezogen auf die Gipsmenge) Borsäure durchgeführt wird, wobei Gips und Wasser im Verhältnis 1 bis 4 : 1 eingesetzt werden.

Als Gips im Sinne der Erfindung ist jede Calciumsulfat-Modifikation geeignet, die hydraulisch abbindet ; insbesondere wird Calciumsulfat-Halbhydrat $CaSO_4 · 1/2 H_2O$ verwendet. Vorteilhaft ist die Verwendung von Gips in feinkörniger Form : der mittlere Durchmesser der Gips-Partikel beträgt dabei 10 bis 150 μm, vorzugsweise 20 bis 60 μm.

Der erfindungsgemäße Schaumgips enthält als schaumbildende Komponente ein Polyurethan (PU), das während der Verschäumung unter Abspaltung von Kohlendioxid aus dem jeweils eingesetzten Polyurethan-Voraddukt entsteht. Im Schaumgips liegt das Polyurethan in einer Menge von 1 bis 15 Gewichtsprozent, vorzugsweise 5 bis 10 Gewichtsprozent, vor (bezogen auf die Gipsmenge).

Als PU-Voraddukt dient ein Polyester oder Polyether mit freien Isocyanatgruppen. Das Molekulargewicht (Zahlenmittel) der PU-Vorprodukte liegt im Bereich von 3 000 bis 20 000, vorzugsweise 5 000 bis 10 000. Diese PU-Vorprodukte sind handelsüblich (vgl. z. B. DE-B-25 46 181).

Der erfindungsgemäß verwendete Polyvinylalkohol ist teilverseift und weist eine Esterzahl von mindestens 50 mgKOH/g, vorzugsweise von 80 bis 200 mgKOH/g, auf. Die Viskosität einer 4 gewichtsprozentigen wäßrigen Lösung des Polyvinylalkohols liegt im Bereich von 3 bis 40 mPa · s, vorzugsweise 10 bis 30 mPa · s (gemessen nach DIN 53 015 bei einer Temperatur von 20 °C nach Höppler). Der Polyvinylalkohol wird erfindungsgemäß in einer Menge von 0,05 bis 5 Gewichtsprozent, vorzugsweise 0,1 bis 1 Gewichtsprozent (bezogen auf die Gipsmenge), eingesetzt. Die optimale Menge richtet sich von Fall zu Fall nach dem jeweils verwendeten Polyvinylalkohol-Typ.

Das wesentliche Merkmal der Erfindung ist die gemeinsame Anwendung von Polyvinylalkohol und Borsäure. Diese wird in einer Menge von 0,05 bis 2 Gewichtsprozent, vorzugsweise 0,1 bis 0,5 Gewichtsprozent (bezogen auf die Gipsmenge), eingesetzt. Borsäure bewirkt bei Polyvinylalkohol bekanntlich die Bildung eines Monodiol-Komplexes, die eine erhebliche Erhöhung der Viskosität der Polyvinylalkohol-Lösung zur Folge hat. Diese Viskositätserhöhung wirkt sich erfindungsgemäß dahingehend aus, daß die Verschäumung gleichmäßig verläuft und zu einem Schaumgips mit feiner und homogener Porenstruktur führt.

Zum Abbinden des Gipses wird Wasser benötigt. Seine Menge ist so zu bemessen, daß das Gemisch aus Gips, PU-Vorprodukt und Wasser einen rührfähigen und schäumfähigen Brei bildet. Das für das erfindungsgemäße Verfahren erforderliche Gips/Wasser-Verhältnis beträgt normalerweise 1 bis 4 : 1, vorzugsweise 2 bis 3 : 1. Gegebenenfalls wird zusätzlich noch ein Gipsverflüssiger eingesetzt, und zwar in einer Menge von 0,1 bis 3 Gewichtsprozent, vorzugsweise 0,3 bis 1,5 Gewichtsprozent (bezogen auf die Gipsmenge). Geeignete Gipsverflüssiger sind insbesondere handelsübliche Melaminharze, vorzugsweise sulfonsäure-modifizierte Melaminharze, z. B. Polykondensate aus Melamin, Formaldehyd und Sulfonat im Molverhältnis von 1 : 6 : 3 oder 1 : 2 : 1.

Für eine ausreichende Durchmischung des Gipsbreis ist es notwendig, daß die Schäumreaktion nicht sofort, sondern etwas verzögert einsetzt. Daher empfiehlt sich der Einsatz eines Schäumkatalysators mit verzögerter Wirkung. Hierfür eignet sich insbesondere Dibutylzinndilaurat, das an einen Träger gebunden ist. Als Trägermaterial dienen vor allem Minerale mit netzartiger Struktur (Zeolithe), die in Pulverform eingesetzt werden. Das Gewichtsverhältnis von Katalysator zu Träger beträgt dabei 1 : 2 bis 1 : 12, vorzugsweise 1 : 4 bis 1 : 10. Der Katalysator wird üblicherweise in einer Menge von 0,05 bis 0,8 Gewichtsprozent, vorzugsweise von 0,2 bis 0,5 Gewichtsprozent (bezogen auf die Menge des PU-Vorprodukts), verwendet.

Der Gips soll nicht vor Beendigung der Schäumreaktion abbinden. Es ist daher zweckmäßig, das Aufschäumen in Gegenwart eines Abbindeverzögerers durchzuführen. Hierzu eignen sich vor allem Carboxymethylcellulose sowie Fruchtsäuren wie Zitronensäure und Weinsäure. Der Abbindeverzögerer wird in einer Menge von 0,1 bis 2 Gewichtsprozent, vorzugsweise 0,5 bis 1 Gewichtsprozent (bezogen auf die Gipsmenge), verwendet.

Solange der Gips noch nicht abgebunden ist, besteht die Gefahr, daß der frische Schaum zusammenfällt. Dieses Zusammenfallen wird durch Verwendung eines Schaumstabilisators verhindert. Geeignete Schaumstabilisatoren sind vor allem Celluloseether, z. B. Methylcellulose und Methylhydroxyethylcellulose, sowie handelsübliche Silikonverbindungen. Die Menge des Schaumstabilisators beträgt normalerweise 0,05 bis 2,0 Gewichtsprozent, vorzugsweise 0,1 bis 1,0 Gewichtsprozent (bezogen auf die Menge des PU-Vorproduktes).

Eine verstärkte Verschäumung läßt sich gegebenenfalls durch den zusätzlichen Einsatz eines Treibmittels erzielen. Zu diesem Zweck sind insbesondere flüssige organische Verbindungen mit niederem Siedepunkt anwendbar, vorzugsweise Fluorkohlenwasserstoffe mit 1 bis 4 Kohlenstoffatomen und 1 bis 10 Fluoratomen. Geeignete Treibmittel sind beispielsweise Trichlorfluormethan und 1, 1, 2-Trichlortrifluor-ethan.

Das Treibmittel wird in einer Menge von 3 bis 30 Gewichtsprozent, vorzugsweise 5 bis 15 Gewichtsprozent (bezogen auf die Menge des PU-Voraddukts), verwendet.

Die erfindungsgemäße Verschäumung wird üblicherweise bei einer Temperatur von 20 bis 60 °C, vorzugsweise 25 bis 45 °C, durchgeführt. Es ist vorteilhaft, wenn das benötigte Wasser vor dem Einsatz bereits auf Schäumtemperatur vorgewärmt wurde.

Eine besondere Ausführungsform des erfindungsgemäßen Verfahrens besteht darin, daß entweder der Polyvinylalkohol oder die Borsäure — jeweils in Form einer wäßrigen Lösung — dem Gemisch der übrigen den Gipsbrei bildenden Komponenten als letzter Bestandteil zugefügt wird. Durch diese Maßnahme wird die Rührfähigkeit des Gipsbreis sichergestellt, da die Ausbildung des Polyvinylalkohol/Borsäure-Komplexes und die damit verbundene Viskositätserhöhung auf diese Weise verzögert wird.

Das erfindungsgemäße Verfahren ist ohne besonderen technischen Aufwand durchzuführen. Der erhaltene Schaumgips zeigt gleichmäßig kugelförmige Poren und verbesserte mechanische Eigenschaften, insbesondere eine erhöhte Biegezugfestigkeit und Druckfestigkeit (gemessen nach DIN 1 164). Die durchschnittliche Porengröße (Durchmesser) liegt im Bereich von 0,5 bis 4 mm, vorzugsweise 1 bis 2 mm.

Der erfindungsgemäße Schaumgips eignet sich vor allem zur Anwendung als Isoliermaterial auf dem Bausektor, d. h. zur Isolation gegen Wärme und Schall. Er kann direkt in vorgefertigten Formen hergestellt werden und bildet dann Bauelemente beliebiger Gestalt, z. B. Platten, Prismen, Quader und Würfel.

Die nachstehenden Beispiele erläutern die Erfindung. Prozentangaben beziehen sich dabei auf das Gewicht.

Beispiel 1

220 g eines handelsüblichen PU-Voraddukts auf Polyether-Basis mit einem mittleren Molekulargewicht von 10 000 und 16 % freien NCO-Gruppen werden mit einer Lösung von 5 g eines teilverseiften Polyvinylalkohols, der eine Esterzahl von 140 mgKOH/g aufweist und dessen 4 %ige wäßrige Lösung bei 20 °C eine Viskosität von 18 mPa · s zeigt, in 215 g Wasser sowie mit 2 g einer Methylhydroxyethylcellulose, deren 2 %ige wäßrige Lösung bei 20 °C eine Viskosität von 4 Pa · s zeigt, und mit 5 g Dibutylzinndilaurat auf Zeolith (Gewichtsverhältnis 1 : 9) fein emulgiert. Diese Emulsion wird unter Rühren mit einem Brei aus 2,6 kg Gips (α-Halbhydrat), 9 g Borsäure, 1,5 g eines handelsüblichen Gemisches aus Fruchtsäuren und Natrium-polyphosphat sowie 930 ml Wasser von 35 °C vermischt. Das erhaltene Gemisch wird dann in eine würfelförmige Schäumform mit 8 1 Inhalt gefüllt. Nach etwa 5 min beginnt das Gemisch aufzuschäumen und hat nach 16 min die Form ausgefüllt. Nach 30 min ist das Abbinden des Gipses beendet, und der Gipswürfel wird ausgeschalt.

Nach dem Trocknen bei einer Temperatur von 40 °C hat der erhaltene Schaumgips ein Litergewicht von 360 g. Seine Biegezugfestigkeit beträgt 0,43 N/m² und die Druckfestigkeit 0,72 N/m² (gemessen an Quadern mit der Abmessung 4 cm × 4 cm × 16 cm).

Vergleichsbeispiel 1

Beispiel 1 wird wiederholt, jedoch ohne Verwendung von Borsäure.

Der so erhaltene Schaumgips hat ein Litergewicht von 370 g, eine Biegezugfestigkeit von 0,27 N/m² und eine Druckfestigkeit von 0,47 N/m².

Vergleichsbeispiel 2

Beispiel 1 wird wiederholt, jedoch ohne Verwendung von Polyvinylalkohol.

Der so erhaltene Schaumgips hat ein Litergewicht von 350 g, eine Biegezugfestigkeit von 0,3 N/m² und eine Druckfestigkeit von 0,56 N/m².

Ansprüche

1. Schaumgips, enthaltend Polyvinylalkohol, ein Polyurethan in einer Menge von 1 bis 15 Gewichtsprozent (bezogen auf Gips) und gegebenenfalls weitere übliche Zusatzstoffe, dadurch gekennzeichnet, daß er den Polyvinylalkohol, der eine Esterzahl von mindestens 50 mg KOH/g und dessen 4 gewichtsprozentige wäßrige Lösung eine Viskosität von 3 bis 40 mPa · s aufweist (gemessen nach DIN 53 015 bei einer Temperatur von 20 °C nach Höppler), in einer Menge von 0,05 bis 5 Gewichtsprozent (bezogen auf Gips) und 0,05 bis 2 Gewichtsprozent (bezogen auf Gips) Borsäure enthält und das Litergewicht des Schaumgipses 200 bis 1 000 g beträgt.

2. Schaumgips nach Anspruch 1, dadurch gekennzeichnet, daß er eine durchschnittliche Porengröße (Durchmesser) von 0,5 bis 4 mm aufweist.

3. Verfahren zur Herstellung von Schaumgips durch Verschäumen eines Gemisches aus Gips, Polyvinylalkohol, Borsäure, Wasser, einem Polyurethan-Voraddukt, einem Katalysator und gegebenenfalls weiteren üblichen Zusatztoffen, dadurch gekennzeichnet, daß das Verschäumen bei einer Temperatur von 20 bis 60 °C in Gegenwart von 0,05 bis 5 Gewichtsprozent (bezogen auf die Gipsmenge) eines Polyvinylalkohols, der eine Esterzahl von mindestens 50 mg KOH/g und dessen 4 gewichtsprozentige wäßrige Lösung eine Viskosität von 3 bis 40 mPa · s aufweist (gemessen nach DIN 53 015 bei einer Temperatur von 20 °C nach Höppler), und 0,05 bis 2 Gewichtsprozent (bezogen auf die Gipsmenge) Borsäure durchgeführt wird, wobei Gips und Wasser im Verhältnis von 1 bis 4 : 1 eingesetzt werden.

4. Verfahren nach Anspruch 3, dadurch gekennzeichnet, daß der Gips in Form von Partikeln mit einem mittleren Durchmesser von 10 bis 150 μm eingesetzt wird.

5. Verfahren nach Anspruch 3, dadurch gekennzeichnet, daß entweder der Polyvinylalkohol oder die Borsäure, jeweils in Form einer wäßrigen Lösung, dem Gemisch der übrigen den Gipsbrei bildenden Komponenten als letzter Bestandteil zugefügt wird.

6. Verwendung des Schaumgipses nach Anspruch 1 als Isoliermaterial.

7. Verwendung des Schaumgipses nach Anspruch 1 zur Herstellung von Bauelementen.

Claims

1. Foamed gypsum containing polyvinyl alcohol, a polyurethane in an amount of from 1 to 15 percent by weight (calculated on gypsum) and, if appropriate, further conventional additives, characterised in that it contains the polyvinyl alcohol, which has an ester number of at least 50 mg KOH/g and the 4 percent strength by weight aqueous solution of which has a viscosity of from 3 to 40 mPa · s (measured according to DIN 53 015 at a temperature of 20 °C according to Höppler), in an amount of from 0.05 to 5 percent by weight (calculated on gypsum) and 0.05 to 2 percent by weight (calculated on gypsum) of boric acid and that the weight per litre of the foamed gypsum amounts to 200 to 1 000 g.

2. Foamed gypsum according to claim 1, characterised in that it has an average pore size (diameter) of from 0.5 to 4 mm.

3. Process for the production of foamed gypsum by foaming a mixture of gypsum, polyvinyl alcohol, boric acid, water, a polyurethane preadduct, a catalyst and, if appropriate, further conventional additives, characterised in that the foaming is carried out, at a temperature of from 20 to 60 °C, in the presence of from 0.05 to 5 percent by weight (calculated on the amount of gypsum) of a polyvinyl alcohol, which has an ester number of at least 50 mg KOH/g and the 4 percent strength by weight aqueous solution of which has a viscosity of from 3 to 40 mPa · s (measured according to DIN 53 015 at a temperature of 20 °C according to Höppler), and from 0.05 to 2 percent by weight (calculated on the amount of gypsum) of boric acid, while using gypsum and water in a ratio of from 1 to 4 : 1.

4. Process according to claim 3, characterised in that the gypsum is used in the form of particles having an average diameter of from 10 to 150 µm.

5. Process according to claim 3, characterised in that either the polyvinyl alcohol or the boric acid, in each case in the form of an aqueous solution, is added as last component to the mixture of the other components forming the gypsum slurry.

6. Use of the foamed gypsum according to claim 1 as isolating material.

7. Use of the foamed gypsum according to claim 1 for the manufacture of constructional elements.

**Revendications**

1. Plâtre-mousse, contenant de l'alcool polyvinylique, un polyuréthanne présent en une quantité de 1 à 15 % en poids (par rapport au plâtre) et éventuellement d'autres additifs usuels, plâtre caractérisé en ce qu'il contient, en une quantité de 0,05 à 5 % en poids (par rapport au plâtre) l'alcool polyvinylique dont l'indice d'ester est au moins égal à 50 mg de KOH/g et dont la solution aqueuse à 4 % en poids présente une viscosité de 3 à 40 mPa · s (mesurée d'après la norme DIN 53 015 à la température de 20 °C d'après Höppler) et 0,05 à 2 % en poids (par rapport au plâtre) d'acide borique, et en ce que le poids d'1 litre du plâtre-mousse se situe entre 200 et 1 000 g.

2. Plâtre-mousse selon la revendication 1, caractérisé en ce qu'il présente une grosseur moyenne des pores (diamètre) de 0,5 à 4 mm.

3. Procédé pour la préparation d'un plâtre-mousse, par moussage d'un mélange de plâtre, d'alcool polyvinylique, d'acide borique, d'eau, d'un prépolymère de polyuréthanne, d'un catalyseur et éventuellement d'autres additifs usuels, procédé caractérisé en ce qu'on effectue le moussage à une température de 20 à 60 °C en présence de 0,05 à 5 % en poids (par rapport à la quantité du plâtre) d'un alcool polyvinylique, qui présente un indice d'ester d'au moins 50 mg de KOH/g et dont la solution aqueuse à 4 % en poids présente une viscosité de 3 à 40 mPa · s (mesurée d'après la norme DIN 53 015 à la température de 20 °C d'après Höppler), et de 0,05 à 2 % en poids (par rapport à la quantité de plâtre) d'acide borique, en utilisant le plâtre et l'eau selon un rapport compris entre 1 : 1 et 4 : 1.

4. Procédé selon la revendication 3, caractérisé en ce qu'on utilise le plâtre sous forme de particules ayant un diamètre moyen de 10 à 150 µm.

5. Procédé selon la revendication 3, caractérisé en ce qu'on introduit l'alcool polyvinylique ou l'acide borique, chaque fois sous forme d'une solution aqueuse, comme dernier constituant du mélange des autres constituants formateurs de la bouillie de plâtre.

6. Application du plâtre-mousse selon la revendication 1 comme matériau isolant.

7. Application du plâtre-mousse selon la revendication 1 pour la préparation d'éléments de construction.